# EUROPÄISCHE PATENTSCHRIFT

(11) **EP 2 934 792 B1**
(45) Veröffentlichungstag und Bekanntmachung des Hinweises auf die Patenterteilung: **24.07.2019**
(21) Anmeldenummer: 13805350.9
(22) Anmeldetag: 12.12.2013
(51) Int. Cl.: H01M 4/134, H01M 4/1395, H01M 4/38, H01M 4/62, H01M 4/04, H01M 10/052, B22F 3/22, B22F 7/08, B22F 1/00

(54) **SUSPENSION UND VERFAHREN ZUR HERSTELLUNG EINER LITHIUMPULVERANODE**
SUSPENSION AND METHOD FOR PREPARING A LITHIUM POWDER ANODE
SUSPENSION ET PROCÉDÉ DE FABRICATION D'UNE ANODE EN POUDRE DE LITHIUM

(30) Priorität: 19.12.2012 DE 102012223826; 20.02.2013 DE 102013202769
(43) Veröffentlichungstag der Anmeldung: 28.10.2015
(73) Patentinhaber: Albemarle Germany GmbH, 65926 Frankfurt am Main (DE)
(72) Erfinder: WIETELMANN, Ulrich, 61381 Friedrichsdorf (DE); EMMEL, Ute, 65929 Frankfurt am Main (DE); HARTNIG, Christoph, 65817 Eppstein (DE)
(74) Vertreter: Rottmayer, Hans
(86) Internationale Anmeldenummer: PCT/EP2013/076364
(87) Internationale Veröffentlichungsnummer: WO 2014/095561

(56) Entgegenhaltungen:
- WO-A1-2008/143854
- WO-A1-2012/100983
- DE-A1- 19 642 878

## Beschreibung

Wiederaufladbare elektrochemische Speichersysteme erlangen gegenwärtig für viele Bereiche des täglichen Lebens eine steigende Bedeutung. Neben den schon seit längerem bestehenden Anwendungen als Automobilstarterbatterie und als Energiequelle für die portable Elektronik werden in der Zukunft starke Zuwächse für den Antrieb von Elektroautos und für die stationäre Energiespeicherung vorhergesagt. Für die neuen Anwendungen kommen traditionelle Blei/Schwefelsäureakkumulatoren nicht in Frage, weil sie eine viel zu geringe Kapazität aufweisen und sie nicht genügend häufig zyklisierbar sind. Beste Chancen werden dagegen Lithiumbatterien eingeräumt.

Während primäre (d.h. nicht wiederaufladbare Lithiumbatterien) in der Regel eine Lithiummetallanode aufweisen, enthalten wiederaufladbare Lithiumbatterien, das sind im allgemeinen Lithiumionenbatterien, aus Gründen der Sicherheit kein metallisches Lithium, sondern ein graphitisches Material als Anode. Die Verwendung von Graphit, das im geladenen Zustand bis zur Grenzzusammensetzung LiC₆ geladen werden kann, hat jedoch zur Folge, dass die Kapazität gegenüber der Verwendung von metallischem Lithium deutlich niedriger ist. Die Verwendung von metallischem Lithium als Anodenmaterial brächte gegenüber Graphiten eine beträchtlich Steigerung sowohl der volumetrischen als auch der gravimetrischen Kapazitäten:

| Theoretische Kapazitäten | Graphit | Lithiummetall |
|---|---|---|
| gravimetrisch (Ah/kg) | 372 | 3.860 |
| volumetrisch (Ah/L) | 841 | 2.061 |

Die Verwendung von Lithiumanoden bestehend aus blechförmigem Lithium ist vor allem deshalb nicht möglich, weil das Lithium sich insbesondere bei hohen Stromdichten beim Ladevorgang in der Regel nicht planar, sondern dendritisch, d.h. nadelförmig abscheidet. Dadurch ist es möglich, dass Teile des Lithiums abgeschnürt werden, d.h. den elektronischen Kontakt zum Rest der Anode verlieren. Die Folge ist ein relativ schneller Kapazitätsabfall bei fortgesetztem Zyklisieren der galvanischen Zelle. Ein zusätzliches Problem besteht darin, dass Dendriten den Separator durchwachsen können. Dies kann einen Kurzschluss mit hoher Wärmefreisetzung bewirken. Der Lithiumschmelzpunkt kann dann leicht überschritten werden. Geschmolzenes Lithium ist enorm reaktiv und im Kontakt mit entzündlichen Batteriekomponenten (z.B. organischer Elektrolyt) kann ein explosionsartiges Durchgehen der Zelle ("thermal runaway") nicht ausgeschlossen werden (M. Winter, J.O. Besenhard, Chemie in unserer Zeit 33 (1999) 320-331. Es ist bekannt, dass die Tendenz zur Dendritenbildung von der flächenbezogenen Stromstärke abhängt. Ein blechförmiges Lithium (Lithiumfolie) weist eine deutlich geringere spezifische Oberfläche auf als eine Elektrode, die aus pulverförmigem Lithiummetall besteht. Bei BET-Messungen (Analysenverfahren nach Brunauer, Emmet, Teller) konnte gezeigt werden, dass mechanisch bei einem Druck von 15 MPa kompaktierte Li-Partikel (Durchmesser 20 µm) eine spezifische Oberfläche von ca. 0.4 m²/g aufweisen, während ein blechförmiges Lithium nur ca. 0,1 m²/g aufweist (M.S. Park, W.Y. Yoon, J. Power Sources 114 (2003) 237-243).Die Folge ist, dass solchermaßen hergestellte Pulveranoden wesentlich zyklenfester sind. So sind mit einer gepressten Pulveranode bei einer Zyklenrate von C/2 mindestens 100 Zyklen ohne signifikanten Kapazitätsverlust zu beobachten, während mit einer Folienelektrode ab dem 40. Zyklus ein drastischer Kapazitätseinbruch beobachtet wird (J.S. Kim, S. Baek, W.Y. Yoon, J. Electrochem. Soc. 157 (2010) A984-A987). Nachteilig am Preßverfahren für die Herstellung einer Lithiumpulveranode ist jedoch, dass dieses Verfahren nicht oder nur mit hohen Kosten scale-up-fähig ist. Moderne, rationelle Verfahren der Elektrodenbandproduktion bestehen darin, eine Suspension von Aktivmaterialien unter Zusatz eines Bindemittels in einem Lösungsmittel herzustellen und diese Suspension durch ein Beschichtungsverfahren (Gießen, Drucken, etc) auf die Stromableiterfolie aufzubringen. Als Binder eignen sich beispielsweise teilfluorierte Polymere wie Polyvinylidendifluorid (PVdF). Dieses Polymer löst sich aber nur in sehr stark polaren Lösungsmitteln wie N-Methylpyrrolidon (NMP) oder Dimethylsulfoxid (DMSO), ferner (bedingt) in Aceton oder Tetrahydrofuran (THF). So wurde die Herstellung einer Li-Pulveranode im Suspensionsverfahren unter Verwendung von PVdF-Binder und THF als Lösemittel beschrieben (C.W. Kwon, et al., J. Power Sources 93 (2001) 145-150).

Die Verwendung stark polarer Lösemittel ist für die Dispergierung von Lithiumpulver nur bedingt möglich bzw. sinnvoll. Aufgrund der relativ hohen Reaktivität selbst von gecoatetem (also geschütztem) Lithiumpulver ist die Möglichkeit heftiger Reaktionen (häufig runaway) bei der Anodenherstellung nicht ausgeschlossen. Um also ein thermisches Ereignis zu vermeiden, ist die Anodenfertigung bei möglichst tiefen Temperaturen (Raumtemperatur oder darunter) durchzuführten; dazu muss das Lösemittel den PVdF-Binder bereits bei milden Temperaturen lösen und es muss sich bei der anschließenden Anodentrocknung möglichst leicht entfernen lassen. Leider haben alle bekannten solchermaßen wirksamen Lösemittel einen relativ hoch liegenden Siedepunkt. Dies zeigt die folgende Tabelle:

| Lösemittel ^{a} | Siedetemperatur [°C] | Flammpunkt [°C] |
|---|---|---|
| Dimethylformamid | 153 | 67 |
| Dimethylacetamid ^{b} | 166 | 70 |
| Tetramethylharnstoff | 177 | 65 |
| Dimethylsulfoxid | 189 | 35 |
| Triethylphosphat | 215 | 116 |
| N-Methyl-2-pyrrolidon ^{b} | 202 | 95 |

| | | |
|---|---|---|
| ^{a} aktive Lösemittel, die mindestens 5 bis 10 % (KYNAR® Harz) PVdF bei Raumtemperatur auflösen ^{b} Gebräuchlichste Lösemittel | | |

Die Reaktivität gegenüber Lithiummetall läßt kein sicheres Arbeiten unter Verwendung der o.g. Solvenzien zu. In der vorliegenden Anmeldung werden einige Daten gezeigt.

Es gibt polare, weniger reaktive Solvenzien für PVdF, beispielsweise THF, die gegenüber Lithiumpulver etwas weniger reaktiv sind. Diese lösen PVdF aber nur bei höheren Temperaturen:

| Lösemittel ^{c} | Siedetemperatur [°C] | Flammpunkt [°C] |
|---|---|---|
| Aceton | 56 | -18 |
| Tetrahydrofuran | 65 | -17 |
| Methylethylketon | 180 | -6 |
| Methylisobutylketon | 118 | 23 |
| Glykolether ^{d} | 118 | 40 |
| Glykoletherester ^{d} | 120 | 30 |
| n-Butylacetat | 135 | 24 |
| Cyclohexanon | 157 | 54 |
| Diacetonalkohol | 167 | 61 |
| Diisobutylketon | 169 | 49 |
| Acetessigester | 180 | 84 |
| Butyrolacton | 204 | 98 |
| Isophoron | 215 | 96 |
| Carbitolacetat | 217 | 110 |
| Propylencarbonat | 242 | 132 |
| Glycerintriacetat | 258 | 146 |
| Dimethylphthalat | 280 | 149 |

| | | |
|---|---|---|
| ^{c} latente Lösemittel lösen oder quellen (KYNAR®) PVdF-Homopolymer bei Raumtemperatur im wesentlichen nicht; sie lösen (KYNAR® Harz) PVdF bei erhöhten Temperaturen, aber beim Abkühlen kristallisiert das Harz (z.B. das Harz fällt aus der Lösung aus) ^{d} Basierend auf Ethylenglycol, Diethylenglycol und Propylenglycol | | |

Durch den Zwang zur Verwendung höherer Temperaturen wird der Vorteil geringerer Reaktivität gegenüber metallischem Lithium aufgehoben.

Es ist weiterhin bekannt, Elektroden aus einer Mischung umfassend Partikel aus einem elektrochemisch aktiven Material, einem Binder und einem Lösungs- und/oder Dispergiermittel herzustellen, wobei es sich bei dem Binder zumindest anteilig um ein Polyisobuten handelt und das Lösungs- und/oder Dispergiermittel zumindest anteilig aus mindestens einem aromatischen Kohlenwasserstoff besteht und wobei das elektrochemisch aktive Material u.a. Lithium in passivierter metallischer Form sein kann (WO2012/100983). Dieses Verfahren hat allerdings ebenfalls Nachteile. Zum einen sind viele aromatische Lösungsmittel, z.B. der Grundkörper Benzol, als giftig einklassifiziert. Weiterhin sind Aromaten gegenüber metallischem Lithium zumindest bei höheren Temperaturen noch reaktionsfähig. Schließlich ist es bekannt, dass Aromaten wie z.B. Cyclohexylbenzol oder Biphenyl elektrochemisch aktiv sind, sie nämlich bei Überschreiten eines bestimmten Potentials polymerisieren und auch reduktiv insbesondere im Kontakt mit einer Lithiummetallanode empfindlich sind (z.B. Y. Watanabe, J.Power Sources 154 (2006) 246). Es ist deshalb notwendig, die unter Verwendung aromatischer Lösemittel hergestellten Elektrodenbänder außerordentlich sorgfältig zu trocknen. Dieser Prozeß ist langwierig und entsprechend kostenintensiv.

Aus dem Dokument DE 196 42 878 A1 sind für elektrochemische Zellen geeignete Elektrodenmaterialien bekannt, bei denen die in einer elektrochemischen Reaktion Lithiumionen reversibel aufnehmenden und abgebenden Feststoffe durch ein polymeres Bindemittel, welches im wesentlichen aus fluorfreien Monomeren aufgebaut ist, gebunden werden. Als Lösemittel für die polymeren Bindemittel werden aliphatische Ether, insbesondere Tetrahydrofuran und Dioxan, Kohlenwasserstoffe, insbesondere Kohlenwasserstoffgemische wie Benzin, Toluol und Xylol, aliphatische Ester, insbesonder Ethylacetat und Butylacetat und Ketone, insbesondere Aceton, Ethylmethylketon und Cyclohexanon angegeben. Als Lithiumionen reversibel aufnehmenden und abgebenden Feststoffe werden lediglich Kohlenstoff und ein Mn-, Co-, Ni-, Fe- Oder Mo-ionen und Lithiumionen enthaltendes Mischoxid genannt.

Die vorliegende Erfindung wird durch die Ansprüche definiert und hat sich zur Aufgabe gestellt, ein Verfahren für die Herstellung von Lithiummetallpulveranoden aufzuzeigen, das
- eine sichere Handhabung auch bei höheren Temperaturen gewährleistet
- die Verwendung von möglichst ungiftigen Lösemitteln mit anwendungstechnisch optimaler Flüchtigkeit zulässt
- Lösemittel verwendet, die in Lithiumbatterien keine negativen Folgen haben, d.h. die elektrochemisch nicht aktiv sind und
- mindestens gleich gute Bindeeigenschaften gewährleistet wie PVdF-Binder.

Die Aufgabe wird durch ein Verfahren zur Herstellung einer Lithiummetallanode gelöst, dadurch gekennzeichnet, dass sphärische Lithiummetallpartikel mit einem mittleren Durchmesser zwischen 5 und 200 µm in der Lösung eines fluorfreien Bindemittels ausgewählt aus gesättigten Polyolefinen und Polyolefin-Copolymeren ausschließlich in einem oder mehreren flüssigen, gesättigten Kohlenwasserstoffe mit Siedepunkten zwischen 25 und 300°C suspendiert, diese Suspension auf eine elektronisch leitfähige Folie aufgebracht und das Lösungsmittel aus der Anodenschicht abgedampft wird.

Die Erfindung erstreckt sich auch auf eine homogenisierte Suspension für die Herstellung einer Lithiummetallanode, dadurch gekennzeichnet, dass sie
- sphärische Lithiummetallpartikel, die einen mittleren Partikeldurchmesser (D50) zwischen 5 und 200µm aufweisen,
- fluorfreie Bindermittel ausgewählt aus gesättigten Polyolefinen und Polyolefin-Copolymeren und
- ausschließlich gesättigte Kohlenwasserstoffe mit Siedepunkten zwischen 25 und 300°C enthält.

Das fluorfreie Bindersysteme und Lösemittel sind gegenüber Lithium nicht reaktiv. Als Binder werden gesättigte oder ungesättigte kautschukartige Polymere verwendet. Diese Binder sind im allgemeinen in flüssigen Kohlenwasserstoffen quellbar und z.T. löslich.

Es wurde überraschend gefunden, dass Lithiumpulver sowohl gegenüber den erfindungsgemäßen Bindern als auch gegenüber den eingesetzten Lösemitteln thermisch außerordentlich stabil ist, in der Regel bis deutlich über der Temperatur des Lithiumschmelzpunktes (180°C).

Die kautschukartigen Polymere enthalten vorzugsweise nur die Elemente C und H. Es sind gesättigte Polyolefine und Polyolefin-Copolymere wie Ethylen-Propylen-Copolymere (EPM), Ethylen-Propylen-Terpolymere (EPDM) und Polybutene. Es sind solche Produkte bevorzugt, die sich in gegenüber Lithiummetall unreaktiven Lösungsmitteln (beispielsweise Kohlenwasserstoffen) lösen.

Besonders bevorzugt sind EPDM-Terpolymere (z. B. unter dem Markennamen Nordel IP 4570 von Firma Dow erhältlich) oder Polyisobutene (z.B. OPPANOL-Typen wie OPPANOL B200, von Firma BASF lieferbar). Es wurde gefunden, dass diese Bindemittel in gegenüber Lithiummetall inerten Lösemitteln, das sind gesättigte Kohlenwasserstoffe, löslich sind und diese Binderlösungen gegenüber Lithiummetall eine sehr hohe Stabilität aufweisen. Außerdem wurde überraschend gefunden, dass mit erfindungsgemäßen Bindersystemen hergestellte Lithiumpulveranoden deutlich bessere Zykeleigenschaften aufweisen als solche, die mit einem Fluorpolymer (PVdF) hergestellt wurden.

In der nachfolgenden Tabelle wird der Beginn der per DSC-Tests bestimmten Zersetzungsreaktion zwischen verschiedenen Lösemitteln sowie Lösemittel-Binderkombinationen und Lithiummetallpulver aufgezeigt:

| Lösemittel/Binder | NMP | NMP/PVdF | THF | THF/PVDF | Xylol | Decan | Decan/OPPANOL |
|---|---|---|---|---|---|---|---|
| Beginn therm. Zers. (°C) | 90 | 110 | 140 | 140 | ca. 300 | >350 | >250 |
| Reaktionswärme | stark | extrem stark | mittel | stark | mild | keine | keine |

Der Versuchsaufbau ist wie folgt: ca. 2 ml Lösungsmittel bzw. ca. 2ml Lösungsmittel und 100 mg des jeweiligen Binders sowie 100 mg gecoatetes Lithiummetallpulver wurden in einer Argon-gefüllten Handschuhbox in Stahlautoklaven des RADEX-Systems der Firma Systag (Schweiz) gefüllt und hermetisch verschlossen. Diese Mischungen wurden dann mit einer Heizrate von 45 K/h bis zu Endtemperaturen von 200°C (NMP-haltige Mischungen) bzw. 250 oder 350°C (Kohlenwasserstoff-haltige Mischung) aufgeheizt und die thermischen Ereignisse registriert.

Im Vergleich zum fluorierten Polymer PVdF erkennt man ganz klare Stabilitätsvorteile für die Verwendung von OPPANOL B200: OPPANOL-haltige Mischungen in gesättigten Kohlenwasserstoffen sind bis mindestens 250°C gegenüber metallischem Lithium stabil. Während im Falle des gesättigten Kohlenwasserstoffs Decan bis zur Endtemperatur von 350°C kein signifikantes Exotherm registriert wird, beobachtet man im Falle der Mischung von Lithiummetall mit dem aromatischen Lösungsmittel Xylol beginnend bei 300°C ein deutliches Exotherm.

Die Herstellung flächiger Lithiumpulver-basierter Anoden unter Verwendung erfindungsgemäßer Bindersysteme erfolgt in ähnlicher Weise wie bei der Verwendung von PVdF.

Der Binder wird zunächst in einem gegenüber Lithiummetall inerten, flüchtigem Lösungsmittel oder einem Lösungsmittelgemisch gelöst. Das Lösungsmittel enthält bevorzugt einen oder mehrere flüssige Kohlenwasserstoffe mit Siedepunkten zwischen 25 und 300°C, bevorzugt 60 und 200°C. Dies können gesättigte offenkettige oder zyklische Verbindungen wie z.B. Hexane, Heptane, Oktane, Dekane oder Dodekane sein. Es können auch handelsübliche Kohlenwasserstoff-Siedeschnitte wie z.B. Shellsol D70 oder D100 verwendet werden. Das Lösemittel oder Lösemittelgemisch kann darüber hinaus Ether, z.B. Diethylether, Dibutylether, Diphenylether, Tetrahydrofuran, Tetrahydropyran oder Glymes (Ethylengykoldialkylether) enthalten oder daraus bestehen. Bevorzugt sind Lösungsmittel, die ausschließlich gesättigte Kohlenwasserstoffe enthalten. Aufgrund der Vielzahl auch kommerziell erhältlicher Kohlenwasserstoffprodukte unterschiedlicher Kettenlänge kann ein breiter Bereich für den Siedepunkt und die Flüchtigkeit des Lösemittels ausgewählt werden.

Die Konzentration des Binders richtet sich nach der jeweiligen Löslichkeit im verwendeten Lösungsmittel sowie der Viskosität der entstehenden Lösung. Im allgemeinen schwankt die Konzentration zwischen 0,1 und 20 Gew.%, bevorzugt 1 und 10 Gew.%.

Das Lithiumpulver wird zusammen mit eventuellen weiteren Hilfsstoffen, das sind beispielsweise leitfähigkeitsverbessernde Additive (Ruße, feinverteilte Graphite oder nicht mit Lithium legierbare Metallpulver, wie Ti- und Ni-Pulver) mit der Binderlösung gemischt. Das Lithiumpulver besteht aus sphärischen Lithiummetallpartikeln, die einen mittleren Partikeldurchmesser (D₅₀) (Partikelgrößenbestimmung durch Laserlichtstreuungsmessung mittels Lasentec FBRM von Firma Mettler Toledo) zwischen 5 und 200 µm, bevorzugt 10 und 100 µm aufweisen. Die Lithiumpartikel weisen bevorzugt eine inertisierende Beschichtung nach Stand der Technik auf (z.B. US 8,021,496; WO 2012/052265).

Je nach Konsistenz' der Mischung wird eventuell noch weiteres gegenüber Lithium unreaktives oder inertes Lösungsmittel dazugegeben. Der Mischvorgang erfolgt durch Schütteln, Rühren oder ein sonstiges fest/flüssig-Mischverfahren. Das Gewichtsverhältnis (Gew. : Gew.) zwischen trockenem Bindermaterial und Lithiumpulver liegt im allgemeinen zwischen 1 zu 1 - 1.000, bevorzugt 1 zu 10 - 200.

Bevorzugt erfolgt der Mischvorgang schonend, d.h. in einer Art und Weise, die verhindert, dass die Lithiumkügelchen mechanisch deformiert oder beschädigt werden.

Die homogenisierte Suspension wird dann nach Stand der Technik durch Gießen, Drucken u. dgl. auf eine Stromableiterfolie bestehend aus einem gegenüber Lithium inerten elektronisch leitfähigen Material aufgebracht. Bei diesem Material handelt es sich bevorzugt um eine dünne Nickel- oder Kupferfolie.

Nach dem Beschichtungsprozess wird die feuchte Anodenschicht getrocknet. Dies erfolgt durch Verdampfen des Lösungsmittels, entweder bei Raumtemperatur (RT) oder leicht erhöhter Temperatur (maximal 80°C), gegebenenfalls unter reduziertem Druck.

Die Suspensionsherstellung und -verarbeitung erfolgt in einer Umgebung, mit der die verwendeten Anodenmaterialien kompatibel sind. Das ist entweder trockene Luft (Taupunkt bevorzugt ≤ -40°C) oder eine Inertatmosphäre (bevorzugt Helium oder Argon). Nach Trocknung der Anodenbeschichtung kann sich ein Verdichtungsprozess anschließen, für den in der Regel ein Kalander eingesetzt wird.

Die erfindungsgemäß hergestellte Lithiummetallanode weist eine Schichtdicke zwischen 10 und 500 µm, bevorzugt 15 bis 100 µm auf. Erfindungsgemäß hergestellte Lithiummetallanoden werden im Sinne der Erfindung als gebinderte Lithiumanoden bezeichnet.

Die erfindungsgemäße Lithiumanode wird als Elektrode für Lithiumbatterien verwendet. Bevorzugt wird sie gegen lithiumarme oder lithiumfreie Kathodenmaterialien verschaltet. Solche Kathodenmaterialien sind Schwefel, Übergangmetalloxide (z.B. Manganoxid, Vanadiumoxide, Kupferoxid), Konversionskathodenmaterialien (z.B. nanoskalige Metallfluoride und Metalloxyfluoride). Weiterhin kann sie als negative Elektrode für Lithium-Luft-Batterien eingesetzt werden.

Die Erfindung wird anhand der nachfolgendenfünf Beispielen und fünf Vergleichsbeispielen sowie den Abbildungen 1 bis 12 erläutert.

Es zeigen:
- Abb. 1:: Stabilität von Li-Pulver in Kontakt mit Decan bzw. Decan-OPPANOL B200
- Abb.2:: Stabilität von Lithiummetallpulver in Kontakt mit Decan bis 350°C
- Abb. 3:: Stabilität von Li-Pulver in Kontakt mit Xylol bis 350°C
- Abb. 4:: Stabilität von Li-Pulver in Gegenwart von NMP bzw. NMP-PVdF
- Abb. 5:: Stabilität von Li-Pulver in Gegenwart von THF bzw. THF-PVdF
- Abb. 6:: REM-Bild (Vergrößerung 200 µm] einer mit OPPANOL/Hexan gebinderten Lithiumanode
- Abb. 7:: Zyklovoltagramm (CV) einer mit OPPANOL B200 gebinderten Lithiumanode. Potentialbereich von 0,025 - 1,5 V, Scanrate 25 µV. Gegenelektrode: Graphit MAGD
- Abb. 8:: Zyklentest (CCCV) einer mittels OPPANOL B200 (Lieferant: BASF) gebinderten Lithiumanode und Graphit als Gegenelektrode. Die Kapazität bezieht sich auf die Kapazität der Kohlenstoffelektrode. Die Stromdichte beträgt 1,2 mA/cm²
- Abb. 9:: C-Raten-Untersuchung einer mit OPPANOL gebinderten Lithitumanode und Graphit als Gegenelektrode. Die Kapazität bezieht sich auf die Kapazität der Kohlenstoffelektrode. Stromdichte ist 1,2 mA/cm²
- Abb. 10:: REM-Bild (Vergrößerung 200 µm] einer mit PVdF/NMP gebinderten Lithiumanode
- Abb. 11:: CV einer mittels PVdF/NMP gebinderten Lithiumanode. Potentialbereich von 0,025 - 1,5 V, Scanrate 25 µV, Gegenelektrode: Graphit
- Abb. 12:: Zyklentest einer mittels PVdF/NMP gebinderten Lithiumanöde und Graphit als Gegenelektrode. Die Kapazität bezieht sich auf die Kapazität der Kohlenstoffelektrode. Die Stromdichte beträgt 1,2 mA/cm²

Alle Operationen wurden in einer Ar-gefüllten Handschuhbox oder in einem Trockenraum vorgenommen. Die Zyklisieruntersuchungen wurden mit Hilfe eines Potentiostaten der Firma Maccor durchgeführt.

### Beispiel 1: Stabilität von Lithiummetallpulver im Kontakt mit Decan und einer Lösung von Oppanol in Decan (Auslagerungstemperatur bis 250°C)

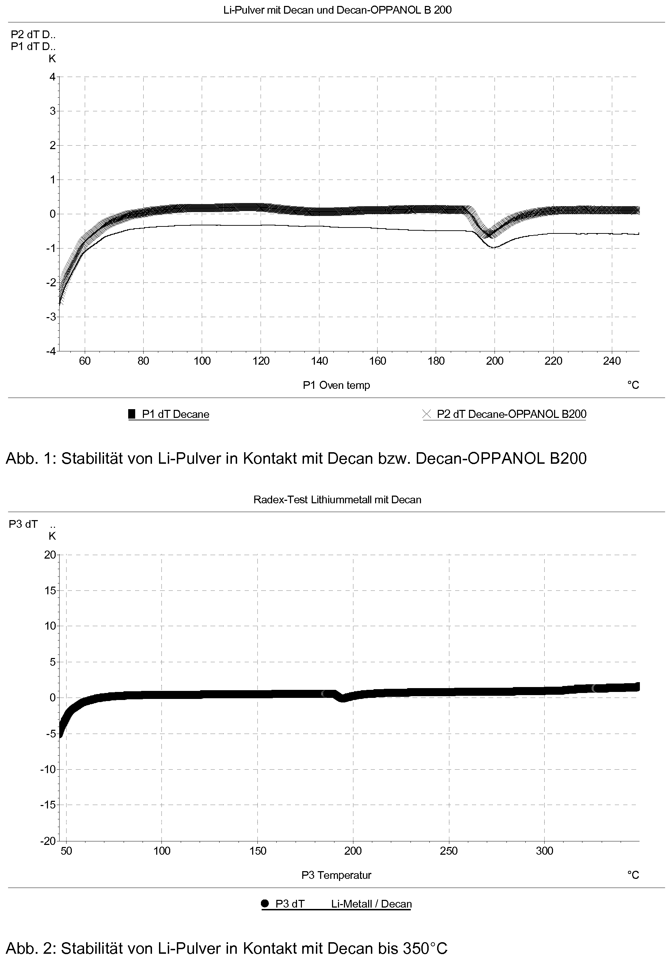

- Abb. 1:: Stabilität von Li-Pulver in Kontakt mit Decan bzw. Decan-OPPANOL B200
- Abb.2:: Stabilität von Lithiummetallpulver in Kontakt mit Decan bis 350°C

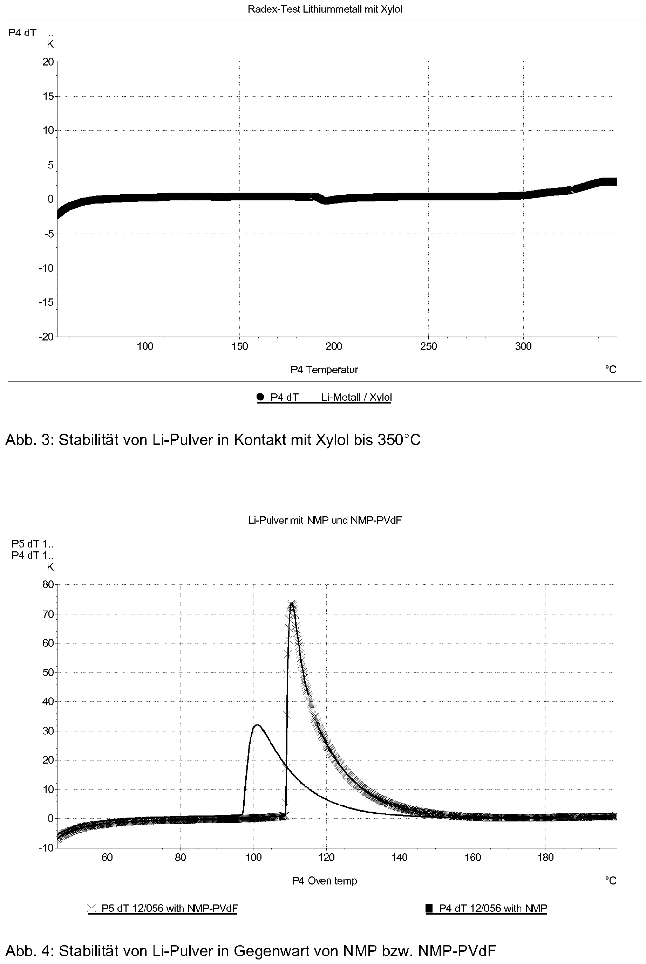

- Abb. 3:: Stabilität von Li-Pulver in Kontakt mit Xylol bis 350°C
- Abb. 4:: Stabilität von Li-Pulver in Gegenwart von NMP bzw. NMP-PVdF

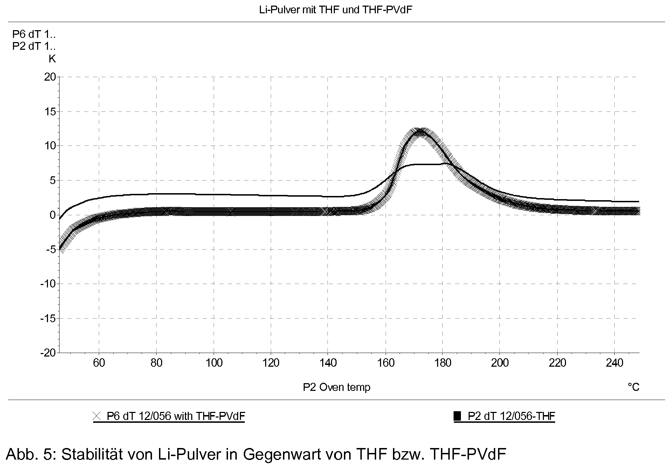

- Abb. 5:: Stabilität von Li-Pulver in Gegenwart von THF bzw. THF-PVdF

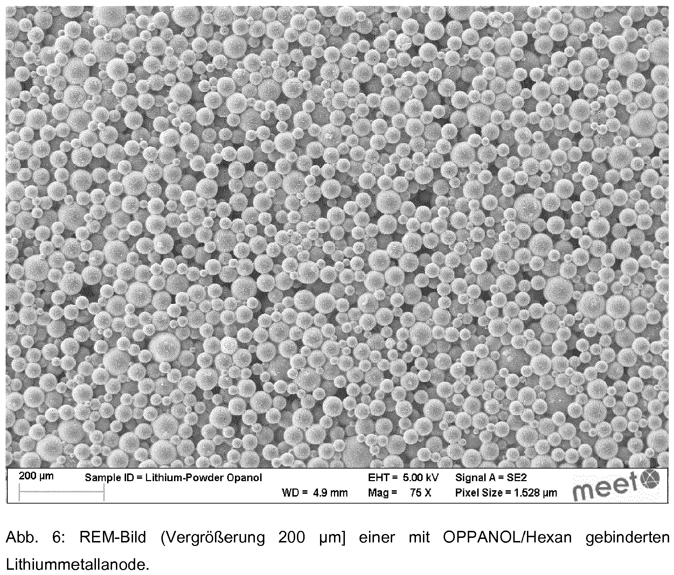

- Abb. 6:: REM-Bild (Vergrößerung 200 µm] einer mit OPPANOL/Hexan gebinderten Lithiumanode

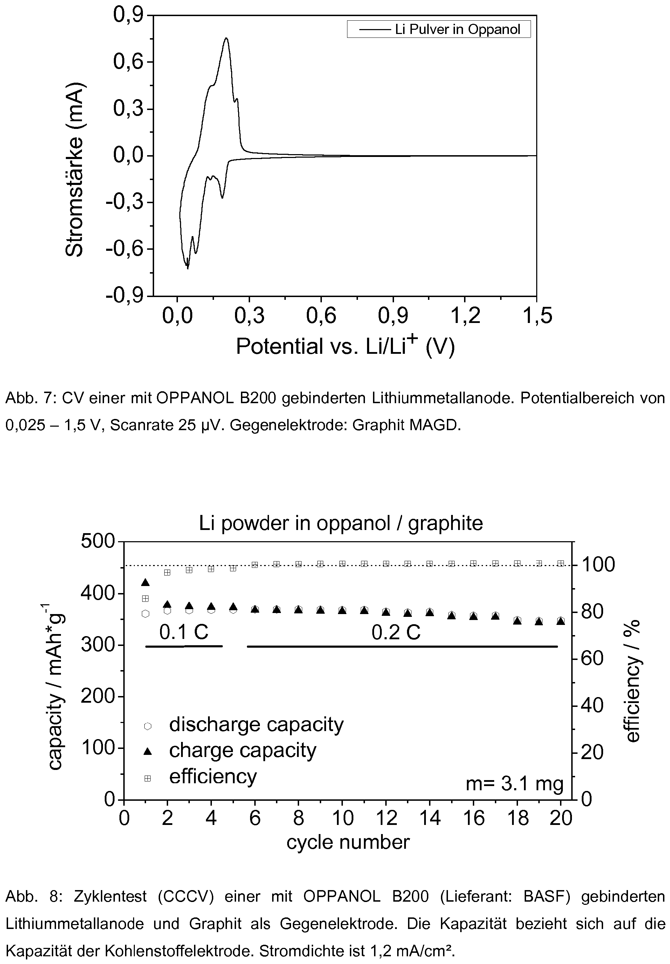

- Abb. 7:: Zyklovoltagramm (CV) einer mit OPPANOL B200 gebinderten Lithiumanode. Potentialbereich von 0,025 - 1,5 V, Scanrate 25 µV. Gegenelektrode: Graphit MAGD
- Abb. 8:: Zyklentest (CCCV) einer mittels OPPANOL B200 (Lieferant: BASF) gebinderten Lithiumanode und Graphit als Gegenelektrode. Die Kapazität bezieht sich auf die Kapazität der Kohlenstoffelektrode. Die Stromdichte beträgt 1,2 mA/cm²

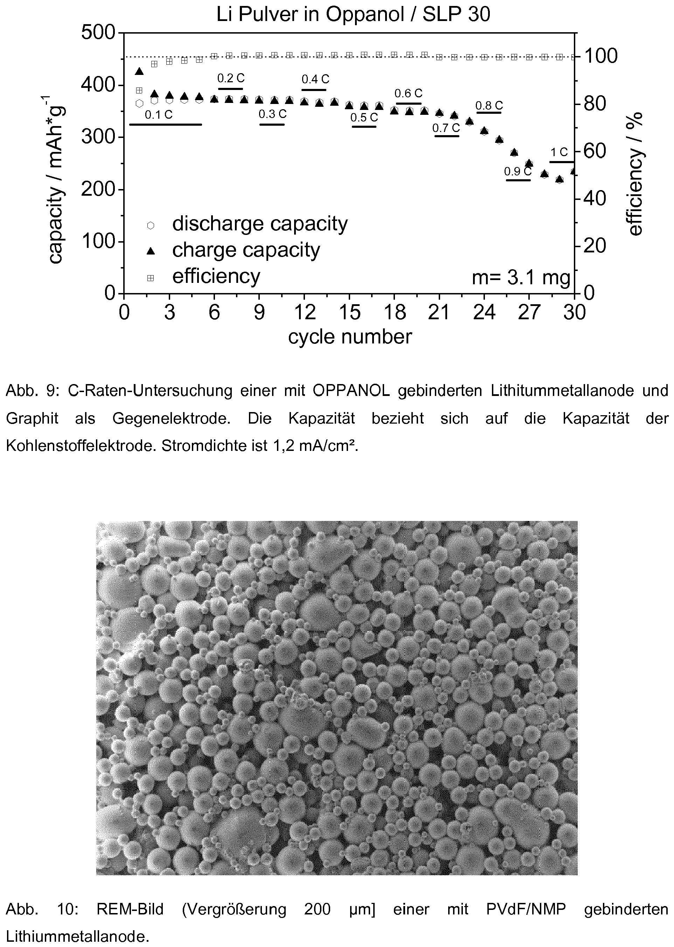

- Abb. 9:: C-Raten-Untersuchung einer mit OPPANOL gebinderten Lithitumanode und Graphit als Gegenelektrode. Die Kapazität bezieht sich auf die Kapazität der Kohlenstoffelektrode. Stromdichte ist 1,2 mA/cm²
- Abb. 10:: REM-Bild (Vergrößerung 200 µm] einer mit PVdF/NMP gebinderten Lithiumanode

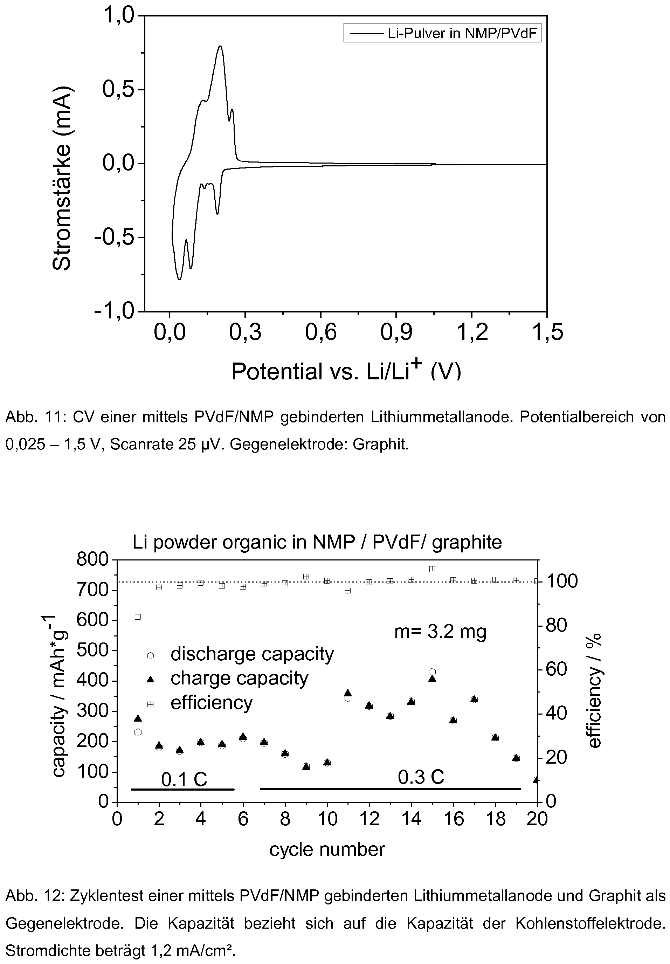

- Abb. 11:: CV einer mittels PVdF/NMP gebinderten Lithiumanode. Potentialbereich von 0,025 - 1,5 V, Scanrate 25 µV, Gegenelektrode: Graphit
- Abb. 12:: Zyklentest einer mittels PVdF/NMP gebinderten Lithiumanode und Graphit als Gegenelektrode. Die Kapazität bezieht sich auf die Kapazität der Kohlenstoffelektrode. Die Stromdichte beträgt 1,2 mA/cm²

Alle Operationen wurden in einer Ar-gefüllten Handschuhbox oder in einem Trockenraum vorgenommen. Die Zyklisieruntersuchungen wurden mit Hilfe eines Potentiostaten der Firma Maccor durchgeführt.

### Beispiel 1: Stabilität von Lithiummetallpulver im Kontakt mit Decan und einer Lösung von Oppanol in Decan (Auslagerungstemperatur bis 250°C)

### Beispiel 4: Herstellung einer mit OPPANOL® B200 gebinderten Lithiumanode unter Verwendung des Lösungsmittels Hexan

Variante. 1: 1-20 Gew.% OPPANOL B200 werden unter Rühren in Hexan gelöst. Dieser Vorgang dauert je nach Temperatur und Konzentration etwa 1 h bis 1 Tag. Lithiummetallpulver wird unter Rühren hinzugefügt und die Suspension wird mit einem Vortex homogenisiert. Die so gewonnene Elektrodensuspension wird mit Hilfe eines Streichmessers (Rakel) auf eine Kupferfolie aufgetragen. Alle Operationen unter Verwendung von Lithiummetallpulver werden entweder in einer Ar-gefüllten Handschuhbox oder in einem Trockenraum mit einem Taupunkt von maximal -40°C vorgenommen.

Je nach Gewichtsanteil des Lithiummetallpulvers kann die Schichtdicke der Elektrode variiert werden. Die minimale Schichtdicke wird dabei von der Partikelgröße des Lithiummetallpulvers bestimmt. Die Nass-Schichtdicke der Elektrode kann zwischen 10 und 500 µm variieren. Abb. 6 zeigt eine nach dem angegebenen Verfahren hergestellte Metallpulveranode.

Variante 2: Eine weitere Möglichkeit besteht darin, zur Hexan/OPPANOL-Lösung zusätzlich ein Leitfähigkeitsadditiv, beispielsweise ein graphitisches Pulver wie Timrex® SFG oder Timrex® SLP oder Leitruße wie Super P® oder ENASCO® 250G (alle diese Produkte sind von Firma Timcal, Schweiz, lieferbar) hinzuzufügen. Die Leitfähigkeitsadditive werden im allgemeinen in Konzentrationen im Bereich von 1 - 10 Gew.% (bezogen auf die Lithiumpulvermenge) verwendet.

Variante. 3: Alternativ kann die Hexan/OPPANOL- Lösung direkt auf eine Kupferfolie aufgebracht und das Lithiummetallpulver auf die Lösung gestreut werden. Hierdurch kann eine Monolage der Lithiummetallpartikel aufgebracht werden.

Die beschichteten, feuchten Elektroden werden im Vakuum bei 80°C getrocknet, gewünschte Formen ausgestanzt und elektrochemisch untersucht.

### Beispiel 5: Zyklentest mit der nach Beispiel 4 (Variante 1) hergestellten gebinderten Lithiumanode

Unter Verwendung der erfindungsgemäßen Anode aus Beispiel 4 wurden elektrochemische Zellen (Swagelock-Design) hergestellt. Die Zellen enthielten als Kathode einen Graphit MAGD der Firma Hitachi Kasai, Japan, Elektrolyt LP30® (Merck, Deutschland) und einen Polyolefin-Separator der Firma Celgard, USA (Celgard+FS2226®). Es wurden jeweils mehrere Lade- Entlade-Zyklen unter Verwendung eines Potentiostaten der Firma Maccor (4300 Batterie Testsystem, Maccor Inc., Tulsa, OK, USA) gefahren. Die angegebenen Kapazitäten beziehen sich jeweils auf die Kapazität der Graphitelektrode.

Die erzielten Ergebnisse sind den folgenden Abbildungen zu entnehmen:
Abb. 6: REM-Bild (Vergrößerung 200 µm] einer mit OPPANOL/Hexan gebinderten Lithiumanode.
Abb. 7: CV einer mit OPPANOL B200 gebinderten Lithiumanode. Potentialbereich von 0,025 - 1,5 V, Scanrate 25 µV. Gegenelektrode: Graphit MAGD.
Abb. 8: Zyklentest (CCCV) einer mittels OPPANOL B200 (Lieferant: BASF) gebinderten Lithiumanode und Graphit als Gegenelektrode. Die Kapazität bezieht sich auf die Kapazität der Kohlenstoffelektrode. Die Stromdichte beträgt 1,2 mA/cm².
Abb. 9: C-Raten-Untersuchung einer mit OPPANOL gebinderten Lithitumanode und Graphit als Gegenelektrode. Die Kapazität bezieht sich auf die Kapazität der Kohlenstoffelektrode. Stromdichte ist 1,2 mA/cm².

### Vergleichsbeispiel 4: Herstellung einer mit PVdF gebinderten Lithiumanode unter Verwendung des Lösungsmittels NMP

1-20 Gew.% PVdF (Lieferant Solvay, Frankreich, PVdF 1013) werden unter Rühren in NMP gelöst. Danach werden die Lithiummetallpartikel hinzugefügt, wobei die Metallkonzentration in der PVdF/NMP-Suspension im Allgemeinen zwischen 50 und 90 Gew.% beträgt. Die so gewonnene Elektrodensuspension wird mit Hilfe eines Streichmessers (Rakel) auf eine Kupferfolie aufgetragen. Die Elektrodenfertigung erfolgte in einem Trockenraum.

Je nach Gewichtsanteil des Lithiummetallpulvers kann die Schichtdicke der Elektrode variiert werden. Die minimale Schichtdicke wird dabei von der Partikelgröße des Lithiummetallpulvers bestimmt. Die Nass-Schichtdicke der Elektrode kann zwischen 10 und 500 µm variieren.

Die lösemittelfeuchten Elektroden werden im Vakuum getrocknet und die gewünschten Formen ausgestanzt.

### Vergleichsbeispiel 5: Zyklenuntersuchungen mit der nach Vergleichsbeispiel 4 hergestellten gebinderten Lithiumanode

Unter Verwendung der PVdF-gebinderten Anode aus Vergleichsbeispiel 4 wurden elektrochemische Zellen (Swagelock-Design) hergestellt. Die Zellen enthielten als Kathode einen Graphit MAGD der Firma Hitachi Kasai, Japan, als Elektrolyt LP30® (Merck, Deutschland) und einen Polyolefin-Separator der Firma Celgard, USA (Celgard+FS2226®). Es wurden jeweils mehrere Lade-Entlade-Zyklen unter Verwendung eines Potentiostaten der Firma Maccor (4300 Batterie Testsystem, Maccor Inc., Tulsa, OK, USA) gefahren. Die angegebenen Kapazitäten beziehen sich jeweils auf die Kapazität der Graphitelektrode.

Die erzielten Ergebnisse sind den folgenden Abbildungen zu entnehmen:
Abb. 10: REM-Bild (Vergrößerung 200 µm) einer mit PVdF/NMP gebinderten Lithiumanode.
Abb. 11: CV einer mittels PVdF/NMP gebinderten Lithiumanode. Potentialbereich von 0,025 - 1,5 V, Scanrate 25 µV. Gegenelektrode: Graphit.
Abb. 12: Zyklentest einer mittels PVdF/NMP gebinderten Lithiumanode und Graphit als Gegenelektrode. Die Kapazität bezieht sich auf die Kapazität der Kohlenstoffelektrode. Stromdichte beträgt 1,2 mA/cm².

Der Vorteil der mit OPPANOL/gesättigtem Kohlenwasserstoffdispergiermittel gebinderten Lithiumanode besteht darin, dass wesentlich höhere Lade- und Entladeraten realisiert werden können als bei der Verwendung von PVdF-Binder, vergleiche Abb. 8 und Abb. 12. Außerdem treten bei der Verwendung von OPPANOL weniger Schwankungen zwischen nachfolgenden Zyklen auf, d.h. das Zyklenverhalten ist stabiler.

## Patentansprüche

1. Verfahren zur Herstellung einer Lithiummetallanode, **dadurch gekennzeichnet, dass** sphärische Lithiummetallpartikel mit einem mittleren Durchmesser zwischen 5 und 200 µm in der Lösung eines fluorfreien Bindemittels ausgewählt aus gesättigten Polyolefinen und Polyolefin-Copolymeren ausschließlich einem oder mehreren flüssigen, gesättigten Kohlenwasserstoffe mit Siedepunkten zwischen 25 und 300°C suspendiert, diese Suspension auf eine elektronisch leitfähige Folie aufgebracht und das Lösungsmittel aus der Anodenschicht abgedampft wird.

2. Verfahren nach Anspruch 1, **dadurch gekennzeichnet, dass** als Lösungsmittel ein oder mehrere flüssige, gesättigte Kohlenwasserstoffe mit Siedepunkten zwischen 60 und 200°C verwendet werden.

3. Verfahren nach Anspruch 2, **dadurch gekennzeichnet, dass** das Lösemittel oder Lösemittelgemisch darüber hinaus Ether oder Glymes enthält.

4. Verfahren nach Anspruch 1 bis 3, **dadurch gekennzeichnet, dass** die Suspension leitfähigkeitsverbessernde Additive enthält.

5. Verfahren nach Anspruch 1 bis 4, **dadurch gekennzeichnet, dass** die Suspension zur Bildung einer Lithiummetallanode mit einer Schichtdicke zwischen 10 und 500 µm, bevorzugt 15 bis 100 µm auf die elektrisch leitfähige Folie aufgetragen wird.

6. Verfahren nach Anspruch 1 bis 5 **dadurch gekennzeichnet, dass** nach Trocknung der Anodenbeschichtung ein Verdichtungsprozess vorgenommen wird, für den in der Regel ein Kalander eingesetzt wird.

7. Homogenisierte Suspension für die Herstellung einer Lithiummetallanode, **dadurch gekennzeichnet, dass** sie
- sphärische Lithiumpartikel die einen mittleren Partikeldurchmesser (D₅₀) zwischen 5 und 200 µm aufweisen,
- fluorfreie Bindermittel ausgewählt aus gesättigten Polyolefinen und Polyolefin-Copolymeren und
- ausschließlich gesättigte Kohlenwasserstoffe mit Siedepunkten zwischen 25 und 300°C enthält.

## Claims

1. A method for producing a lithium metal anode, **characterized in that** spherical lithium metal particles having a mean diameter between 5 and 200 µm are suspended in the solution of a fluorine-free binder selected exclusively from saturated polyolefins and polyolefin copolymers in one or more liquid saturated hydrocarbons having boiling points between 25 and 300 °C, this suspension is applied to an electronically conductive film, and the solvent is evaporated from the anode layer.

2. The method according to Claim 1, **characterized in that**, as solvent, one or more liquid saturated hydrocarbons having boiling points between 60 and 200 °C are used.

3. The method according to Claim 2, **characterized in that** the solvent or solvent mixture moreover contains ether or glymes.

4. The method according to Claims 1 to 3, **characterized in that** the suspension contains conductivity improving additives.

5. The method according to Claims 1 to 4, **characterized in that** the suspension for the formation of a lithium metal anode is applied with a layer thickness between 10 and 500 µm, preferably 15 to 100 µm, onto the electrically conductive film.

6. The method according to Claims 1 to 5, **characterized in that**, after drying the anode layer, a densification process is carried out, for which a calender is used as a rule.

7. A homogenized suspension for the production of a lithium metal anode, **characterized in that** it contains
- spherical lithium particles having a mean particle diameter (D₅₀) between 5 and 200 µm,
- fluorine-free binders selected from saturated polyolefins and polyolefin copolymers, and
- exclusively saturated hydrocarbons having boiling points between 25 and 300 °C.

## Revendications

1. Procédé de fabrication d'une anode au métal lithium, **caractérisé en ce que** des particules de métal lithium sphériques présentant un diamètre moyen entre 5 et 200 µm sont mises en suspension dans la solution d'un liant exempt de fluor sélectionné parmi des polyoléfines saturées et des copolymères de polyoléfine exclusivement dans un ou plusieurs hydrocarbures liquides saturés présentant des poids d'ébullition entre 25 et 300 °C, cette suspension est apposée sur une feuille électroniquement conductrice et le solvant est évaporé de la couche d'anode.

2. Procédé selon la revendication 1, **caractérisé en ce que** l'on utilise comme solvant un ou plusieurs hydrocarbures liquides saturés présentant des points d'ébullition entre 60 et 200 °C.

3. Procédé selon la revendication 2, **caractérisé en ce que** le solvant ou le mélange de solvants contient en outre des éthers ou des glymes.

4. Procédé selon l'une quelconque des revendications 1 à 3, **caractérisé en ce que** la suspension contient des additifs améliorant la conductivité.

5. Procédé selon l'une quelconque des revendications 1 à 4, **caractérisé en ce que** la suspension pour la formation d'une anode au métal lithium est appliquée à raison d'une épaisseur de couche entre 10 et 500 µm, de préférence de 15 à 100 µm, sur la feuille électriquement conductrice.

6. Procédé selon l'une quelconque des revendications 1 à 5, **caractérisé en ce que**, après le séchage du revêtement d'anode, un processus de compactage est entrepris, pour lequel on utilise généralement une calandre.

7. Suspension homogénéisée pour la fabrication d'une anode au métal lithium, **caractérisée en ce qu'**elle contient
- des particules sphériques de lithium qui présentent un diamètre de particules moyen (D₅₀) entre 5 et 200 µm,
- des liants exempts de fluor sélectionnés parmi des polyoléfines saturées et des copolymères de polyoléfines et
- exclusivement des hydrocarbures saturés présentant des points d'ébullition entre 25 et 300 °C.
